Europäisches Patentamt

European Patent Office

Office européen des brevets

(19)

(11) **EP 1 318 662 A2**

(12) **EUROPEAN PATENT APPLICATION**

(43) Date of publication:
**11.06.2003 Bulletin 2003/24**

(51) Int Cl.⁷: **H04N 1/40**

(21) Application number: **02102675.2**

(22) Date of filing: **04.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **04.12.2001 US 7440**

(71) Applicant: **AGFA MONOTYPE CORPORATION
Wilmington, MA 01887-1069 (US)**

(72) Inventor: **Crounse, Kenneth,
c/o Agfa Monotype Corporation
Wilmington, MA 01887 (US)**

(74) Representative:
**Van Ostaeyen, Marc Albert Jozef et al
Agfa-Gevaert
Corporate IP Department,
Septestraat 27
2640 Mortsel (BE)**

(54) **Halftoning with uniformly dispersed dot placement**

(57)    In general, in one aspect, the invention features a method for reproducing a contone image as a halftone image on a recording medium, using threshold values in a threshold matrix, including the steps of providing a base supercell suitable for periodically tiling a plane, which has a plurality of microdots and a plurality of virtual halftone dot centers; assigning an ordering sequence consisting of a series of numbers on the virtual halftone dot centers in the base supercell; assigning threshold values to microdots in response to the ordering sequence thereby generating the threshold matrix in the base supercell; and using the threshold matrix in combination with the contone image to generate a screened halftone image on the recording medium. The step of assigning an ordering sequence includes: (i) assigning a first number in the ordering sequence to a first virtual halftone dot center in the base supercell; (ii) assigning a second consecutive number in the ordering sequence to a second virtual halftone dot center in the base supercell; (iii) calculating a value of an aggregate distance function for each virtual halftone dot center in the base supercell not already included in the ordering sequence; (iv) selecting a next virtual halftone dot center in the base supercell in response to the calculated aggregate distance function, the next virtual halftone dot center having one of the least values of the calculated aggregate distance function; (v) assigning the next consecutive number in the ordering sequence to the selected next virtual halftone dot center in the base supercell; and then repeating steps (iii), (iv), and (v), until each virtual halftone dot center in the base supercell is included in the ordering sequence.

FIG. 4

## Description

FIELD OF THE INVENTION

The present invention relates to devices and methods for the reproduction of images, color or monochrome, by means of halftoning techniques.

BACKGROUND OF THE INVENTION

The art of digital halftoning involves conversion of a contone image, in which image elements each have a color tone value, to a binary, or halftone representation, in which image elements are either "on" or "off." Color tone values become binary dot patterns that are intended to be averaged by the human eye and viewed as the desired color tone. Various periodic and frequency modulation (FM) techniques are known, and each has its benefits and drawbacks.

The halftone dots in periodic halftoning, for example, are laid out on a fixed grid of a given frequency and angle. Tone is modulated by changing the size of the halftone dots. Particular problems arise in these processes where the reproduction characteristics of a halftone dot are size dependent. Examples of such processes are the flexographic, the offset and the xerographic printing processes.

In flexographic printing, for example, the size of the smallest halftone dot on film that still reproduces consistently on press can be as small as 40 micron. Below this size, halftone dots tend to print unevenly or not at all. The unevenness can be improved if a screen is used with a lower frequency. For example, by applying a 65 lpi screen instead of a 120 lpi screen, a stable dot with a size of 40 micron corresponds with a coverage on film of less than 1%. The range over which the discontinuity occurs is hence three times smaller in this case, and the corresponding tone jump will be less disturbing. The use of a 65 lpi screen, however, deteriorates the spatial resolution of the reproduced image and increases the visibility of screening artifacts such as the rosette structure. Thus, in flexography there is a trade-off between the requirements on the range of tones that can be consistently reproduced and the spatial resolution of the image.

Despite its higher resolution, the offset printing process exhibits the same fundamental problem: depending on the quality of the paper and the specifics of the printing process, the maximum frequency of the halftone screen, and hence the spatial resolution, is limited by the demand of a consistent halftone dot reproduction across the tone scale. Even now, few offset processes are capable of rendering images with halftone frequencies higher than 200 lpi without jeopardizing the smoothness of the highlight tone rendition. The same issues occur in electrophotographic printing. A minimum dot size is typically needed in order to obtain stable rendering of halftone dots.

Frequency modulation (FM) techniques are an alternative method in which the average distance between fixed sized halftone dots is varied. By selecting a size for the halftone dot that is large enough for consistent reproduction, the unevenness and other problems described above are avoided. FM screening however, has its own drawbacks. Especially in the midtones, the fixed sized halftone dots exhibit a larger total circumference than the halftone dots in a periodic screen and are therefore more sensitive to variations in size during the various stages of the reproduction process. In addition, most FM screens are prone to graininess, which is particularly objectionable in smooth tone transitions and flat tints. These drawbacks explain why FM screening does not provide a viable solution for all applications.

Yet another solution is known under the name of the "double dot" technique, also known as "split dot" technique or "Respi screens." With this technique, the extremes of the tone scale (highlights and/or shadows) are rendered with halftone dots that are laid out on a grid with the same angle but half the frequency of the halftones in the rest of the tone scale. Since the rendering with halftone dots at half the frequency allows rendering of the same tone value with halftone dots that have a 1.41 times larger diameter, this technique improves the reproduction characteristics of the halftone screen. A disadvantage of the double dot technique is that below a certain dot percentage the same fundamental problem occurs as with the conventional screens, that is, below a certain diameter, which diameter corresponds to a certain tone value, all the halftone dots in the halftone will tend to disappear at the same time during the reproduction, creating an undesirable jump in the tone curve. This means that a discontinuity will occur somewhere in the tone curve. Again, this problem can be solved by selecting a screen that has a lower frequency, but this is, as mentioned already, at the cost of the visibility of artifacts and a reduction of the spatial detail rendering. See U.S. Pat. No. 3,197,558; U. S. Pat. No. 5,068,165; RCA Review, Vol. 31, no. 3, p. 517-533; U.S. Pat. No. 4,501,811; U.S. Pat. No. 4,736,254 and U.S. Pat. No. 4,752,822.

Another approach to creating digital halftones is by using a threshold matrix or "mask" to simulate the classical optical screen. This matrix is an array of threshold values that spatially correspond to the addressable points on the output medium. At each location an input value is compared to a threshold to make the decision whether to print a dot or not. The matrix can be used on a large image by applying it periodically.

In the simplest case this "screen" produces halftone dots that are arranged along parallel lines in two directions, i.e. at the vertices of a parallelogram tiling the plane. If the two directions are orthogonal, the screen can be specified by a single angle and frequency. The halftone dots grow according to a spot function as the desired coverage increases in accordance with the tone level of the reproducible image.

A threshold matrix is said to be suitable for periodically tiling a plane, meaning that the threshold matrix may be repeated horizontally and vertically, or in other directions, such that adjacent threshold matrices fit to each other. A threshold matrix may be square or rectangular, but may also have another shape that is suitable to tile a plane. Specific threshold matrices and tiling methods are described in U.S. Pat. No. 5,155,599 to Delabastita ("Delabastita '599") and EP 0 427 380 B1 to Adobe Systems Inc.

In the US 5,155,599 patent, a square tile is used to produce screens closely approximating an angle or frequency. The tile parameters determine the number of halftone dots contained within a tile and their locations. The halftone dot centers are "virtual" in the sense that they do not necessarily lie on the underlying printer grid. The virtual halftone dot centers are used to generate the threshold matrix. When the threshold matrix is being computed, the halftone dots are created at the dot locations on the output device, as the halftone dots "grow" around the virtual halftone dot centers. To allow for more possible levels of coverage, the dot growth is dithered and the halftone dots do not grow synchronously. Instead, each halftone dot is grown independently in a pre-determined order.

In U.S. Patent No. 5,766,807 to Delabastita *et al.*, an improvement of the tone rendering in the highlights of periodic halftones is obtained by switching from dot size modulation to a form of dot frequency modulation below a certain dot percentage. At levels below this dot percentage, tone is modulated by altering the number of the halftone dots. The dot size at which the transition from dot size to dot frequency modulation occurs is set at a level that can be consistently reproduced. This quality requirement means that no perceptual or objectionable discontinuities in tone reproduction, e.g. variations in density which are dependent on process steps, printing endurance or local differences within one reproduction, are noticeable.

In US 5,766,807 the order in which dots grow has a significant effect on the screen quality. If the new dots are added in a manner that is not well dispersed, the output may appear mottled or grainy. These problems may be especially visible in devices that have very visible device dots or for which there are sudden jumps in the tone reproduction curve. Furthermore, in such devices the interaction between dot growth order in different channels may be important.

For example, if the cyan and magenta dot growth locations are significantly similar, the dither pattern will be more visible than if they were more dispersed.

In ink jet printing, single ink dots created by the device are typically reliably printed. However, in inexpensive ink-jet devices, the smallest printable dot is quite large, typically exceeding 51µm (1/500 inch). To avoid sudden jumps in tone level, some type of dithering should be used among the halftone dots. In the highlights, the dithering may become noticeable because the ink dots are visible to the naked eye. Therefore, the chosen dither order has a significant effect on quality. Furthermore, if small amounts of two colorants are being printed, the interaction between the two dither patterns may also become noticeable. For example, if the two dither patterns are identical, the overlapping dots will be even more visible; on the other hand, two dither patterns that have been designed independently from one another may have random overlaps, which will may make the pattern look grainy.

In all types of printing devices, the dither order can also have another strong effect on image quality in the midtones. Even if the screen itself were not visible due to its high frequency, other patterns can occur due to printer non-linearities. For example, at the tone level when halftone dots just begin to touch, the connection points may be very visible. Since these connections are made in the pattern determined by the dither order, their visibility will be a direct consequence of the order chosen.

There are a number of dither patterns known in the art. For example, the Bayer dither is a recursively-defined pattern, which is known to have optimal dispersion properties. Among other things, the Bayer dither pattern is independent of scale -- dots will be placed based only on their relative positions to the other dots.

The Bayer dither is most easily applied to a square periodic array of an even power of two number of elements, for these reasons, it cannot easily be applied to the dot center grid (except in the 0 degree case) where the dot centers are oriented at a different angle than the tile shape, and any number of dots are possible. Even in cases where the Bayer dither could be used, it may not be desirable in printing systems with visible dots due to the highly regular patterns produced.

Other methods have also been developed for dithering among a small number of dot centers. These methods typically employ a function or set of functions as a measure of dispersion. These functions are evaluated at each potential site for the next dither location, as a function of previously chosen nearby dither locations, and the results are used to choose one of the potential sites. These functions usually embody two strategies: maximizing the distance from adjacent dots in the pattern and minimizing the variance among those distances. Such strategies are best used with a small number of dot centers because they are inherently local, i.e. if many potential sites were to have similar parameters the method could only choose among them at random. This can lead to undesirable white-noise structure at various levels in the dither pattern.

SUMMARY OF THE INVENTION

The above-mentioned deficiencies are largely avoided by a method having the specific features set out in claim 1. Specific features for preferred embodiments of the invention are set out in the dependent claims.

In general, embodiments of the invention improve on those of US 5,155,599 and US 5,766,807 with changes to the way that the ordering sequence of virtual halftone dot centers is generated. The improved ordering sequence that results is then used to create a threshold matrix, which is in turn used for halftoning an image. The improved ordering sequence retains the benefits of US 5,155,599 and US 5,766,807 with additional improvements in operation and image quality.

For example, in one embodiment, the second virtual halftone dot center in the ordering sequence is selected in a manner such that it is asymmetric in relation to the periodic replication of the first virtual halftone dot center. As another example, in another embodiment, an aggregate distance function is used that calculates a sum of inverse distances for each virtual halftone dot center from that virtual halftone dot center to each virtual halftone dot center not already included in the ordering sequence, with each of the distances raised to a positive power. A virtual halftone dot center having one of the least values of the sum is selected as the next virtual halftone dot center in the ordering sequence. As yet another example, in another embodiment, locations of virtual halftone dot centers of other color separations are used in the calculation of a combined aggregate distance function for virtual halftone dot centers of a selected color separation.

In general, in one aspect, the invention features a method for reproducing a contone image as a halftone image on a recording medium, using threshold values in a threshold matrix, including the steps of providing a base supercell suitable for periodically tiling a plane, which has a plurality of microdots and a plurality of virtual halftone dot centers; assigning an ordering sequence consisting of a series of numbers on the virtual halftone dot centers in the base supercell; assigning threshold values to microdots in response to the ordering sequence thereby generating the threshold matrix in the base supercell; and using the threshold matrix in combination with the contone image to generate a screened halftone image on the recording medium. The step of assigning an ordering sequence includes: (i) assigning a first number in the ordering sequence to a first virtual halftone dot center in the base supercell; (ii) assigning a second consecutive number in the ordering sequence to a second virtual halftone dot center in the base supercell; (iii) calculating a value of an aggregate distance function for each virtual halftone dot center in the base supercell not already included in the ordering sequence; (iv) selecting a next virtual halftone dot center in the base supercell in response to the calculated aggregate distance function, the next virtual halftone dot center having one of the least values of the calculated aggregate distance function; (v) assigning the next consecutive number in the ordering sequence to the selected next virtual halftone dot center in the base supercell; and then repeating steps (iii), (iv), and (v), until each virtual halftone dot center in the base supercell is included in the ordering sequence.

In general, in another aspect, the invention features a method for reproducing a contone image as a multi-color halftone image on a recording medium, using threshold values in threshold matrices, including the steps of: (a) providing a first base supercell suitable for periodically tiling a plane, the first base supercell having a first plurality of microdots and a first plurality of virtual halftone dot centers; (b) providing a second base supercell suitable for periodically tiling a plane, the second base supercell having a second plurality of microdots and a second plurality of virtual halftone dot centers; (c) assigning a first ordering sequence and a second ordering sequence to the virtual halftone dot centers in both base supercells, each ordering sequence consisting of series of numbers, (d) assigning threshold values to microdots in response to the first ordering sequence thereby generating the first threshold matrix in the first base supercell; (e) assigning threshold values to microdots in response to the second ordering sequence thereby generating the second threshold matrix in the second base supercell; and (f) using the first threshold matrix and the second threshold matrix in combination with the contone image to generate a screened multi-color halftone image on the recording medium. The step of assigning ordering sequences includes the following steps: (i) assigning a first number in the first ordering sequence to a first virtual halftone dot center in the first base supercell; (ii) assigning a first number in the second ordering sequence to a first virtual halftone dot center in the second base supercell; (iii) calculating a value of a combined aggregate distance function for each virtual halftone dot center from a first plurality of virtual halftone dot centers in the first base supercell not already included in the first ordering sequence; (iv) selecting a first next virtual halftone dot center in the first base supercell in response to the value of the combined aggregate distance function calculated in step (iii), the first next virtual halftone dot center having one of the least values of the combined calculated aggregate distance function; (v) assigning the next consecutive number in the first ordering sequence to the selected first next virtual halftone dot center in the first base supercell; (vi) calculating a value of a combined aggregate distance function for each virtual halftone dot center from a second plurality of virtual halftone dot centers in the second base supercell not already included in the second ordering sequence; (vii) selecting a second next virtual halftone dot center in the second base supercell in response to the value of the combined aggregate distance function calculated in step (vi), the second next virtual halftone dot center having one of the least values of the combined calculated aggregate distance function; (viii) assigning the next consecutive number in the second ordering sequence to the selected second next virtual halftone dot center in the second base supercell and then repeating steps (iii) through (viii), until each virtual halftone dot center in the first base supercell is included in the first ordering sequence and each virtual halftone dot center in the second base supercell is included in the second ordering sequence.

The embodiments of the invention also include screens and screening systems implementing the above methods. The improvements presented herein, separately and in combination, provide improved reproduction of the halftone dots across the full tone scale and provide good spatial resolution.

BRIEF DESCRIPTION OF THE DRAWINGS

The invention is described by way of examples with reference to the accompanying figures, wherein:

FIG. 1 is a flowchart of an embodiment of a method according to one embodiment of the present invention.

FIG. 2 shows an embodiment of a rational tangent supercell, having ten halftone dots.

FIG. 2a shows the rational tangent supercell according to FIG. 2 projected onto the addressable grid of an output device.

FIG. 3 demonstrates by example how a complete and contiguous halftone screen may be obtained by replicating the rational tangent supercell according to FIG. 2 horizontally and vertically.

FIG. 4 is a flowchart of an embodiment of ordering sequence assignment according to the invention.

FIG. 5 shows the generation of a threshold matrix for a supercell in an embodiment in which an algorithm according to the present invention was applied with "maxsizecounter"=1.

FIG. 6 shows the generation of a threshold matrix for a supercell in an embodiment according to the present invention, applied with "maxsizecounter"=4.

FIG. 7 shows a threshold matrix obtained from the matrix in FIG. 5 by rescaling the values to a range from 1 to 255.

FIG. 8 shows an embodiment of a circuit for generating a halftone image, which may be used in combination with the supercell of FIG. 2 or the threshold matrix of FIG. 5.

FIG. 9 shows a rational tangent supercell having 640 virtual dot centers.

FIG. 10a shows a halftone pattern for three tone levels generated using the threshold matrix obtained using the rational tangent supercell in FIG. 9 according to one embodiment of the invention.

FIG. 10b shows a halftone pattern for three tone levels generated using the threshold matrix obtained using the rational tangent supercell in FIG. 9 according to another embodiment of the invention.

FIG. 11 shows for comparison a halftone pattern for three tone levels generated using the threshold matrix according to US 5,766,807.

FIG. 12 is a flowchart of a method according to another embodiment of the present invention.

FIG.13 shows a flowchart of an embodiment of ordering sequence assignment for two color separations according to the invention.

DETAILED DESCRIPTION OF THE INVENTION

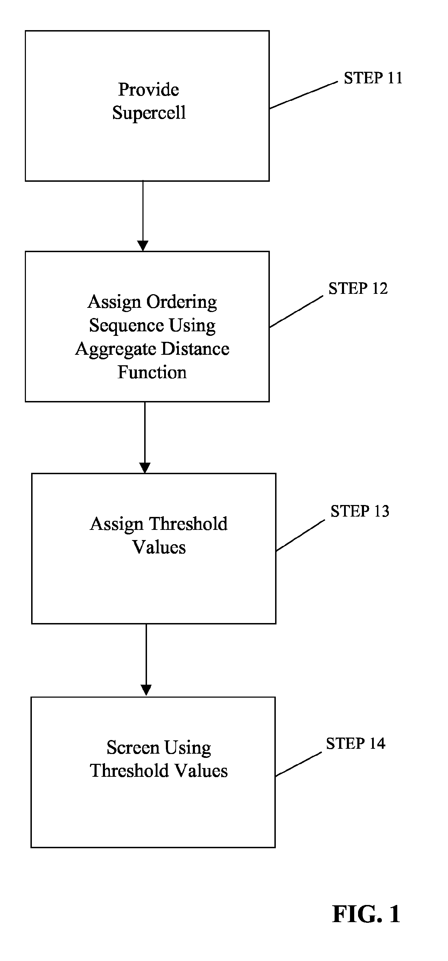

Referring to **FIG. 1**, an embodiment of a method according to the current invention may be used to reproduce a continuous tone image as a halftone image using threshold values in a threshold matrix.
As a first step, a rational tangent supercell, such as described in US 5,155,599, is generated **(STEP 11)**.

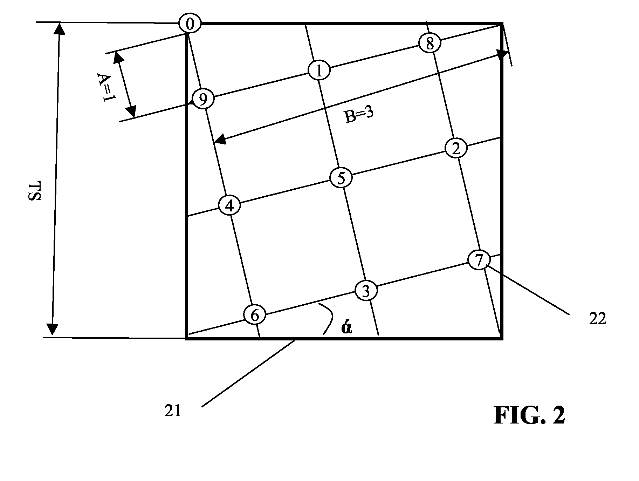

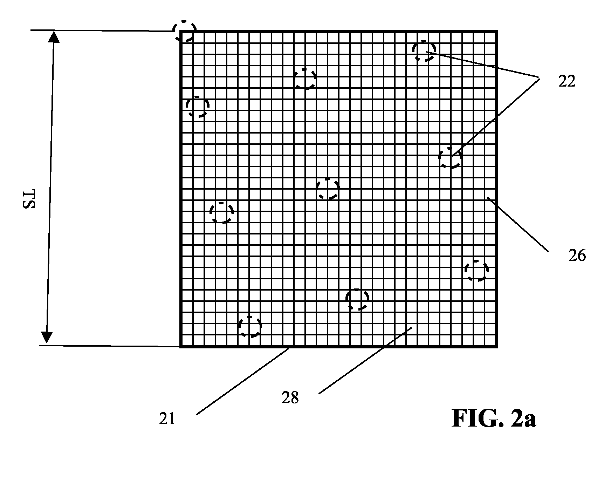

Referring to **FIG. 2**, and as explained in further detail in US 5,155,599, such a supercell **21**, or tile, is characterized by a tilesize TS, indicating the linear size of the tile expressed in a number of microdots, and two integer values A and B, defining the geometry of the halftone screen. The angle $\alpha$ of the screen is given by the arctangent of A/B. The total number of halftone dots **22** in the supercell **21** is designated by the "number_of_dots," and is $(A^2+B^2)$. The total number of microdots contained in the supercell **21** is designated by "number_of_rels" and is equal to TS*TS.

Referring to **FIG. 2a,** the halftone dot centers **22** do not necessarily lie precisely on a whole number of the underlying addressable grid elements of the output device, and thus are referred to as "virtual". The centers of the virtual halftone dots **22** are represented by circles in **FIGS. 2** and **2a.** It is possible, for example, that all or none may line up with the underlying addressable grid **26**, or that some do and some do not. Using a threshold matrix, halftone dots on a recording medium are created out of grid elements or microdots **28** that form dots that "grow" around these virtual halftone dot centers. Virtual halftone dot centers might be "dark" dots, meaning that a cluster of "on" microdots grow around a center, or they might be the centers of "light" dots, meaning that a cluster of "off" microdots grow around a center.

Referring again to **FIG. 2**, in order to describe embodiments of the invention by example, the values A=1 and B=3 were selected. In this example, the supercell has a size of twelve microdots (TS=12) and thus the supercell contains "number_of_rels" = 144 microdots. Each microdot within the supercell is associated with one threshold value in the threshold matrix. As such, 144 threshold values are generated for the supercell **21**. As from the values selected for A and B, the number of halftone dots in the supercell equals to $A^2+B^2=10$.

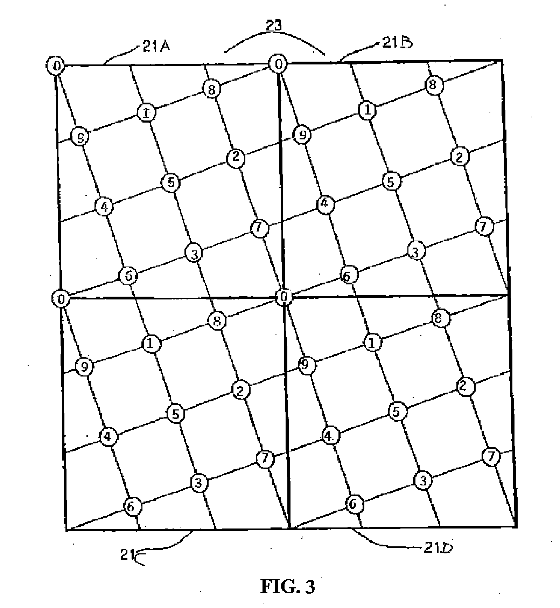

Referring to **FIG. 3,** a complete and contiguous halftone screen **23** may be obtained by replicating the rational tangent supercell **21** horizontally and vertically. The square base supercell **21A** is replicated with adjacent supercells to the right (horizontally) **21B,** below (vertically) **21C,** and at a diagonal (a combination of horizontal and vertical) **21D.** While this example shows 2 x 2 tiles, typically, an image would have many more tiles arranged in horizontal rows and vertical columns.

Referring again to **FIG. 1**, once a supercell has been specified, an ordering sequence is assigned to the virtual halftone dot centers of the supercell using an ordering function **(STEP 12)**. The ordering sequence is a sequence of numbers, for example the series 1, 2, 3 ... number_of_dots. The use of whole, positive numbers and the use of a contiguous series of numbers is not a requirement, and it may be useful in some embodiments to use other types of numbers or orders, to skip numbers, use modulo arithmetic, or other variations, and the term sequence is intended to include such. As described below, in a preferred embodiment the ordering function is an aggregate distance function, although, in some embodiments, features of the invention may be used with other ordering functions.

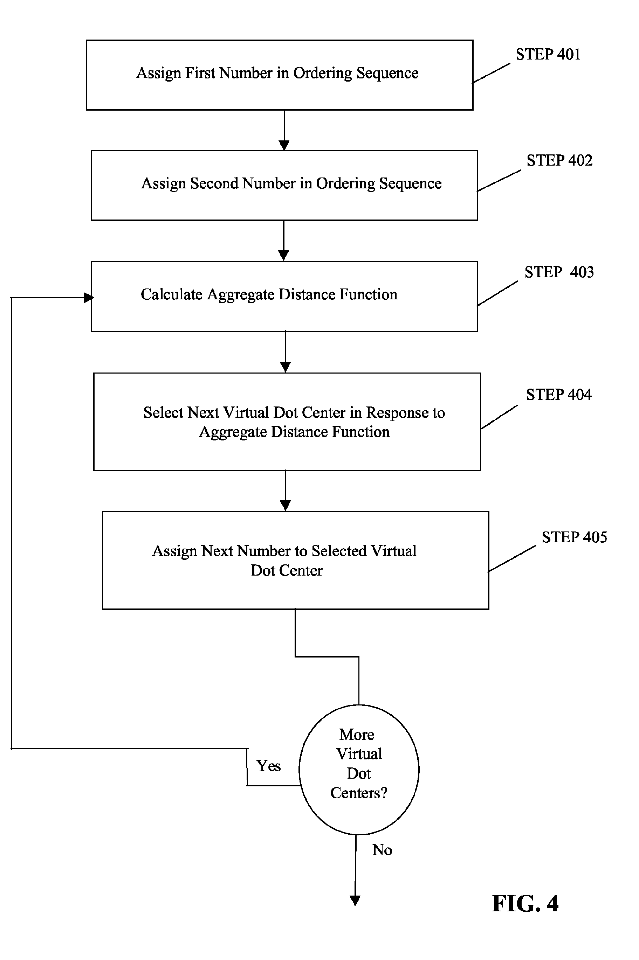

Referring now to **FIG. 4**, the first number of the sequence is assigned to a first virtual halftone dot center in the base supercell **(STEP 401)**. The first number in the sequence is typically the lowest or highest number in the ordering sequence. In the example of **FIG. 2**, the first number in the ordering sequence is the number 0.

The virtual halftone dot center that receives the first number of the sequence can be chosen in a number of ways, including arbitrarily. For example, the virtual halftone dot center located in the top left corner of the supercell can be selected, or alternatively the virtual halftone dot center on the lower right can be selected. The choice of the first virtual dot center generally does not affect the method steps that follow.

Still referring to **FIG. 4**, the second number in the ordering sequence is assigned to a second virtual halftone dot center in the base supercell **(STEP 402)**. The second number is typically the next lowest or highest number in the ordering sequence. In the example of **FIG. 2**, the second number in the ordering sequence is the number 1.

In one embodiment, the virtual halftone dot center that receives the second number in the sequence is selected so that it is disposed asymmetrically in relation to the halftone dot center that has received the first sequence number, taking into account the horizontal and vertical replication. For example, if the respective horizontal and vertical distances between (i) the first virtual halftone dot center and the second virtual halftone dot center, and (ii) the second virtual halftone dot center and the replication of the first virtual halftone dot center in any supercells adjacent to the base supercell, are not equal, the second virtual halftone dot center will be asymmetric. In other words, the distance between the second virtual halftone dot center and the first virtual halftone dot center is substantially not equal to the distance between the second virtual halftone dot center and the replication of the first virtual halftone dot center in any supercells adjacent to the base supercell. In other embodiments, it may be sufficiently asymmetric if just the virtual halftone dot centers that are most symmetric are not chosen.

In another embodiment, the virtual halftone dot center that is assigned the second number in the ordering sequence is selected so that it is disposed symmetrically in relation to the virtual halftone dot center that has received the first sequence number, again, taking into account the horizontal and vertical replication. For example, if the respective horizontal and vertical distances between (i) the first virtual halftone dot center and the second virtual halftone dot center, and (ii) the second virtual halftone dot center and the replication of the first virtual halftone dot center in any supercells adjacent to the base supercell, are substantially equal, the second virtual halftone dot center will be symmetric.

Each next number in the ordering sequence is assigned to a virtual halftone dot center in the base supercell. An aggregate distance function is calculated for each virtual dot center not already included in the ordering sequence **(STEP 403)**. The next number in the ordering sequence is typically the next lowest or highest number in the sequence. For a given virtual halftone dot center, the aggregate distance function is a function that takes as input the distances from that virtual halftone dot center to other virtual halftone dot centers. In one preferred embodiment, the aggregate distance function takes as input the distances from that virtual halftone dot center to other virtual halftone dot centers already included in the ordering sequence. In another embodiment, the aggregate distance function for a given virtual halftone dot center is a function that takes as input all distances from that virtual halftone dot center to other virtual halftone dot centers not already included in the ordering sequence, or some combination. In yet another embodiment, the aggregate distance function for a given virtual halftone dot center is a function that, in addition to taking as input all distances from that virtual halftone dot center to other virtual halftone dot centers, also takes as input the number in the ordering sequence, which is being assigned, as well as the total number of virtual halftone dot centers in the supercell.

Referring still to **FIG. 4**, in one embodiment of the invention, the aggregate distance function is calculated for each virtual halftone dot center not already assigned a number in the ordering sequence. The virtual halftone dot center is selected in response to the aggregate distance function as the virtual dot center that has one of the least values of the calculated aggregate distance function **(STEP 404)**. Typically, the virtual halftone dot center with the lowest aggregate distance value is selected. In a case where there are two or more virtual halftone dot centers with equally (or approximately the same) low values, one of the least values may be selected.

In another embodiment, where the aggregate distance function for a given virtual halftone dot center is a function that takes as input all distances from that virtual halftone dot center to other virtual halftone dot centers not already included in the ordering sequence, the virtual halftone dot center is selected in response to the aggregate distance function as the virtual dot center that has one of the largest values of the calculated aggregate distance function.

Referring again to **FIG. 4**, the next number in the ordering sequence is assigned to the selected virtual dot center **(STEP 405)**. These three steps **(STEP 403, STEP 404**, and **STEP 405)** are repeated until each virtual halftone dot center in the base supercell is included in the ordering sequence.

In one embodiment, the aggregate distance function is the minimization of a convolution-style "cost" function

$$H_j = \sum_k f(d_{j,k}).$$

Each potential next virtual halftone dot center is evaluated in terms of a sum of a specific function f of the distances $d$ between the candidate virtual halftone dot center $j$ and each previously chosen virtual halftone dot center $k$. The candidate virtual halftone dot center with the minimum "cost" is chosen, and the process is iterated until all virtual halftone dot centers in the supercell are included in the ordering sequence.

In a preferred embodiment, the class of functions from which $f$ is chosen is the class of functions $f$:

$$f = \frac{1}{d(j,\,k)^a}, \text{ where a} > 1,$$

This class of functions has useful properties. In particular, this function prevents clustering of the dots. Further, the function is concave as a function of distance, which ensures that local decisions of selecting a best candidate among dot centers take priority over global decisions. Moreover, this function is invariant to arbitrary dilations or contractions of scale. That is, if the units of measurement are arbitrarily scaled, the costs will maintain their relationships. Good performance results can be achieved with values of a of 1.5 and 2.

When using this function and starting with any single initial dot center, the algorithm can produce an approximation of a Bayer dither pattern (up to certain symmetries) on a tile with which it is possible. In other cases, the Bayer pattern may be produced up to the point where the sub-grids contain no further factors of two. To produce patterns with less structure, the initial two (or more) virtual halftone dot centers can be selected such that the chosen virtual halftone dot centers are not symmetric, as described above. Then, the pattern produced will maintain both local and global dispersion but will not follow the standard Bayer dither order.

Referring again to **FIG. 1**, the method further includes assigning the threshold values to microdots to obtain a threshold matrix **(STEP 13)**. This step comprises of assigning microdots to each of the virtual halftone dot centers in the supercell, and then (optionally) rescaling the range of matrix elements to obtain a threshold matrix suitable for electronic screening. In one embodiment of the invention, the threshold values are rescaled according to a range of pixel values within the contone image.

The assignment of microdots is preferentially done by means of three nested loops. Before the outer loop is started, a variable, indicated by "relcounter" is initialized to 0. The outer loop controls the order according to which every virtual halftone dot center is "visited".

Before the middle loop is started, a variable, indicated by "sizecounter", is initialized to 1. The middle loop keeps track of the size of the halftone dot at the virtual halftone dot center that is "being visited".

In the inner loop, a spot function, identified by "S(dot,rel)", is evaluated for each microdot in the supercell, which has not been assigned yet to a virtual halftone dot center. An example of such a spot function is:

$$S(dot,rel) = (X_{dot} - X_{rel})^2 + (Y_{dot} - Y_{rel})^2$$

where $(X_{dot}, Y_{dot})$ represents the position coordinates of the center of the virtual halftone dot or shortly "halftone dot center", and $(X_{rel}, Y_{rel})$ represents the position coordinates of a candidate microdot, also referred to as "microdot center" or, in conjunction with a threshold matrix, "center of threshold matrix element"; and the spot function itself, S(dot,rel) is the square of the Euclidean distance between the virtual halftone dot center $(X_{dot}, Y_{dot})$ and the position of candidate microdot $(X_{rel}, Y_{rel})$. This is just one example of a spot function, and that other spot functions can be used.

Examples of other useful functions include elliptical spot functions and line screens.

At the end of the inner loop, the one microdot is retained that yields the lowest value for the spot function, and the value of the variable "relcounter" is assigned to it, after which the variables "relcounter" and "sizecounter" are incremented by one. The microdot that has received the value is marked as "assigned" to a virtual halftone dot center.

By adding a small random value to the position coordinates $(X_{dot}, Y_{dot})$ of the virtual halftone dot center, the probability that two candidate microdots would yield the same spot function value can be significantly decreased.

If the incremented value of the variable "sizecounter" exceeds a certain preset value "maxsizecounter", the algorithm proceeds by returning to the beginning of the outer loop, at which point the next halftone dot is "visited". Otherwise, it proceeds by returning to the beginning of the middle loop, at which point the search for a next microdot for the same halftone dot or within the halftone dot environment is started.

When the outer loop is left, the following equation holds:

$$relcounter = number\_of\_dots * maxsizecounter + 1$$

The above algorithm is summarized by means of the following pseudo-code:

```
_____

        relcounter = 0;
        for (all the halftone dots in the supercell,
             in order of their assigned sequence)   {
                 sizecounter = 1;
                 do until (sizecounter = maxsizecounter)  {
                     for (all microdots in supercell that have
                     not been
                         assigned yet to a halftone dot)  {
                             evaluate spot function of
                             microdot in
                             combination with halftone
                             dot
                      }
                     assign the value relcounter to the
                     microdot that yields the lowest spot
                     function value
                     sizecounter = sizecounter + 1
                     relcounter = relcounter + 1
                 }
        }

_____
```

**Terms** (in alphabetical order):

*maxsizecounter*: a constant value, indicating the size of the halftone dot at the virtual halftone dot center, in number of microdots, at which the heuristic algorithm stops assigning subsequent microdots to a single virtual halftone dot centers, and starts assigning subsequent microdots to different halftone dots.

*number_of_dots*: total number of halftone dots in a supercell. In a supercell of the type described in **FIG. 2,** this value is equal to $A^2 + B^2$.

*number_of_rels*: total number of microdots in a supercell. In a supercell of the type described in **FIG. 2,** this value is equal to TS*TS.

*relcounter*: counts the total number of microdots in the supercell, already assigned to any halftone dot, during the heuristic search.

*sizecounter*: a variable used in the heuristic algorithms to count the number of microdots assigned to one specific halftone dot.

*tilesize* (*TS*) : the linear size of a supercell, expressed in number of microdots.

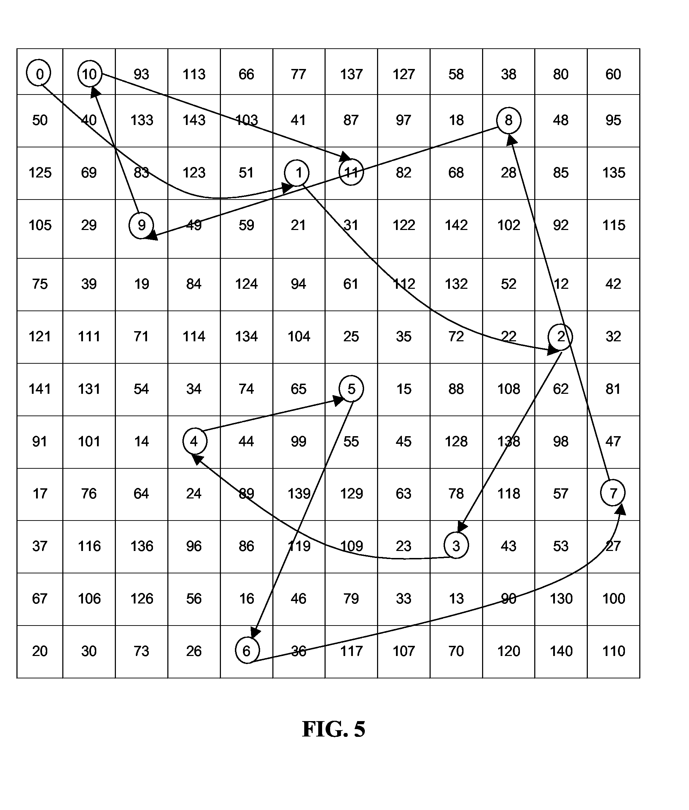

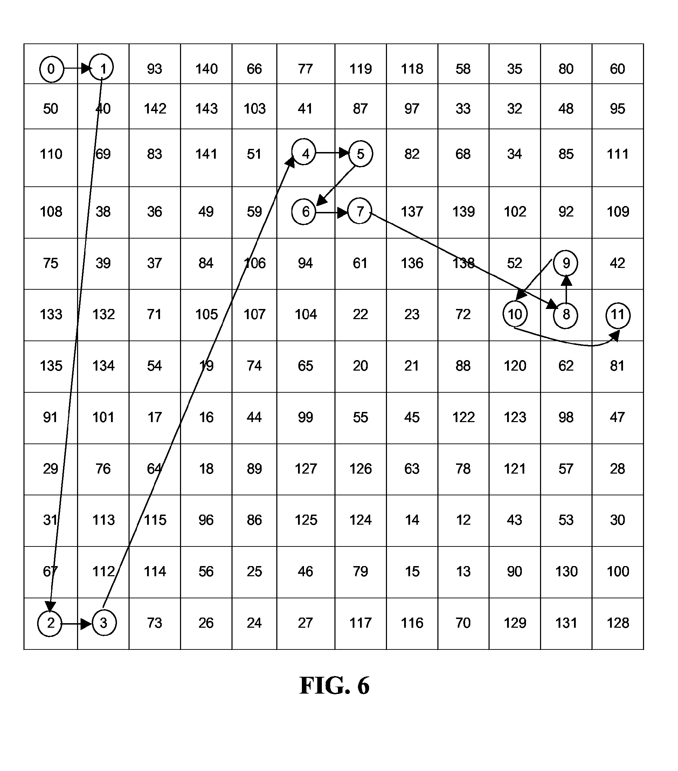

**FIG. 5** and **FIG. 6** show examples where the method was applied for a value of "maxsizecounter" equal to 1 and 4 respectively. In the example of the invention shown in **FIG. 5**, a threshold matrix is generated for a supercell as represented in **FIG. 2**, with "maxsizecounter"=1. This embodiment of the invention is suitable, for example, for inkjet printers, in which a reproduction of a single microdot on the recording medium (e.g., plain paper), is typically stable. In the example of **FIG. 6**, a threshold matrix is shown, for the supercell represented in **FIG. 2**, with "maxsizecounter"=4. This is useful for imaging systems, in which larger dots give better results, such as laser-based imagesetters.

Once the maxsizecounter number of microdots have been assigned to each of the virtual halftone dot centers, the remaining microdots are assigned to the virtual halftone dot centers in the supercell. This is preferentially done by first visiting the virtual halftone dot centers in order of their sequence number and looking for the microdot that yields the lowest spot function value, e.g. the closest microdot according to the spot function. The value of "relcounter" is then assigned to that microdot, after which this value is incremented by one. This process is repeated until no microdots are left in the supercell. This condition is fulfilled when the value of "relcounter" is equal to "number_of_rels". At that point, the heuristic search is stopped. The following pseudo-code summarizes the algorithm:

```
do until (relcounter = number___of__rels)  {
        for (all the halftone dots in the supercell,
            in order of their assigned sequence)   {
                for (all microdots in supercell that have
                not been
                        assigned yet to a halftone dot)  {
                            evaluate spot function of
                            microdot in
                            combination with halftone dot
                 }
                assign the value relcounter to the
                microdot
                that yields the lowest spot function
                value
                relcounter = relcounter + 1
        }
}
```

The above algorithm was used to give the other values required in the matrices according to **FIG. 5** and **FIG. 6**.

Many variations of the above method are possible. For example, the ordering sequence could be used instead to select the order in which to remove microdots from a completely filled in pattern. In this case, the largest thresholds are assigned first. Or, in cases where a symmetric spot function is used, both the smallest and largest thresholds could be assigned according to the chosen order.

For large supercells, it is desirable to optimize the speed of the algorithm. This is preferentially done by limiting the search, in the inner loops of the second and third step, for the microdot yielding the lowest spot function value, to the microdots that are adjacent to the microdots that were previously assigned to the same halftone dot that is being visited. Another speed improvement may be realized by pre-calculating and storing in a look up table all the spot function values of all the microdots in combination with all the halftone dots. The evaluation of the spot function in that case is replaced by a table look up, which is significantly faster than the evaluation itself, especially when a spot function is used that involves heavy floating point arithmetic.

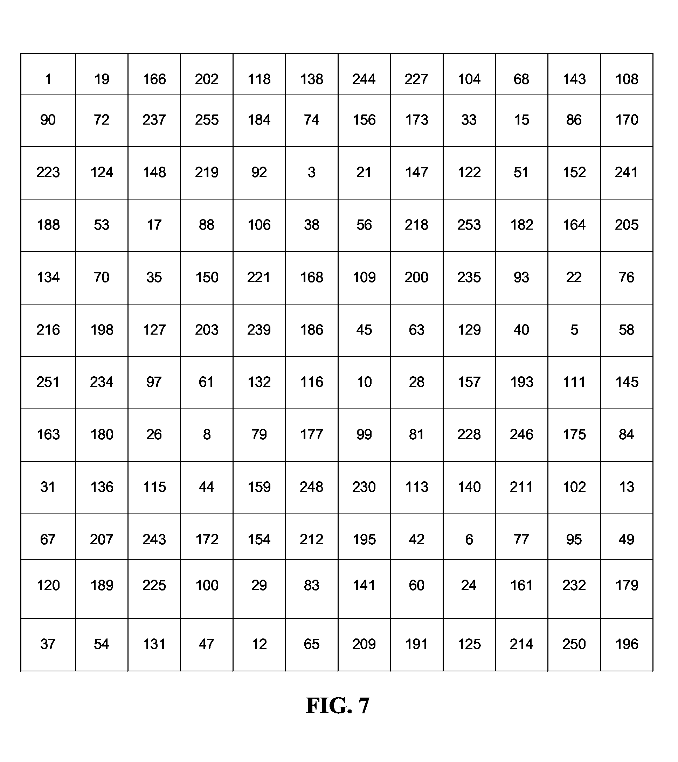

After the microdots are assigned to the virtual halftone dot centers, a matrix with TSxTS elements is obtained. According to the above method, such a matrix contains values ranging from 0 to number_of_rels-1. Before this matrix is used as a screening threshold matrix, its elements are preferentially rescaled to match the range of input image pixels to be screened electronically. For a system with 8 bits, the range of the input image pixels is from 0 to 255. Therefore the range of threshold values is preferentially expanded to the range [1,255]. For this example, which is a range of 1-144, this may be done by multiplying every element by a constant factor equal to 254/143; adding 1 to the result; and rounding the result to the closest integer number. This leads to the matrix shown in **FIG. 7**.

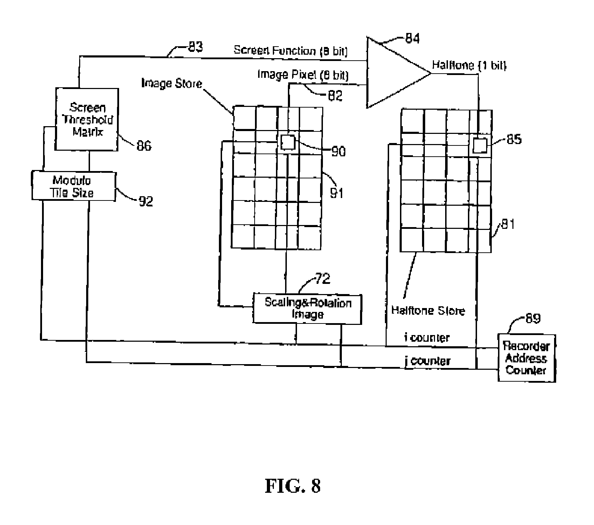

Referring again to **FIG. 1**, the resulting threshold matrix represents a screen (photomechanical or electronic threshold matrix). The method of the present invention concludes with the transformation of a continuous tone image into a halftone image **(STEP 14)**. The threshold matrix according to **FIG. 7** may be used, for example, in a device according to **FIG. 8** for converting a continuous tone image into a halftone image, by combining the threshold values with the contone pixel values of the continuous tone image, and marking a microdot on a film or printing plate as a result of the combination or comparison. A halftone image on film or on a printing plate may also produced in the classical photomechanical way, by using this above described screen.

Alternatively, the original matrix values may be scaled non-proportionally to obtain the final threshold matrix suitable for screening. Such non-proportional scaling, built into the threshold matrix, is extremely useful to achieve a non-linear relationship between the pixel values of the unscreened input image and the halftone dot sizes of the output image, into which these values are translated during the screening operation.

Referring to **FIG. 8**, the threshold matrix may be used in combination with a circuit for halftone generation. The halftone image generator compares at every position of the recorder grid the pixel value with a screen threshold value. Depending on the outcome, the recorder element is turned "on" or "off".

A recorder address counter **89** generates all possible combinations or addresses (i,j) to cover the area occupied by the halftone image **81**, which may be stored partly or wholly within a halftone data store, such as RAM memory, hard drive, etc. A contone image **91** may be stored in an image store, but with an orientation and scale different from the required scale and orientation of the halftone image **81** at the recorder grid. Therefore, the i-counter and j-counter from the recorder address counter **89** undergo a scaling and rotation transformation in a scaling and rotation unit **72**. The input of this unit **72** are the i-counter and j-counter values, the output is an address (x,y) that addresses a contone pixel **90** within the contone image **91**, having a contone pixel value **82**, which is usually an eight bit value ranging from 0 to 255. In another embodiment, the contone image **91** may be brought at the correct orientation and scale before the screening effectively starts, such that the scaling and rotation unit **72** is superfluous, and each contone pixel **90** is addressed directly by the (i,j) address. The contone pixel value **82** is fed into the comparator **84**. At the same time, the address (i,j) is fed into the "modulo tile size unit" **92**. Because, in a preferred embodiment, the threshold matrix **86** is periodical in a horizontal and vertical dimension, only one template of the complete screening function or the threshold matrix (equivalent to a photomechanical screen) must be stored, preferentially as a pre-rotated supertile, comprising several halftone dots, and the (i,j) coordinates can be reduced to [0 .. TS] by a modulo operation on i and j, shown in **92**. TS is the tile size, giving the width and height of the threshold matrix **86**, which is square in a preferred embodiment. The resulting i'=mod(i,TS) and j'=mod(j,TS) values address in the threshold matrix **86** a threshold value **83**, to be compared with the contone pixel value **82**, within the comparator **84**. As a result of this comparison, the recorder element or microdot **85** is turned "on" 40 or "off". E.g. if the image pixel value is less than the threshold value, then the microdot is turned "on" otherwise "off". More information on similar circuits may be found in US 5,155,599 and US 5,766,807. Signals according to the "on" or "off" state of the microdot **85** may now optionally be temporarily stored and then sent to drive an exposing light beam of an image setter, such as Agfa Phoenix™ Series of imagesetters, available from Agfa Corporation of Wilmington, Massachusetts.

The light beam could, for example, expose a graphical film of the type SFP812p, marketed by AGFA-GEVAERT in Mortsel, Belgium. After exposure by a light beam modulated according to the halftone image, the film is developed and dried. This film is exposed in contact with a photosensitive lithographic printing plate precursor, also called imaging element. The imaging element is generally developed thereafter so that a differentiation results in ink accepting properties between the exposed and unexposed areas.

Alternatively, the threshold matrix may be used in combination with a circuit for halftone generation using inkjet printing devices, such as the Lexmark Optra Color 45 and Lexmark J110 inkjet printers available from Lexmark International, Inc. of Lexington, Kentucky.

**Example**

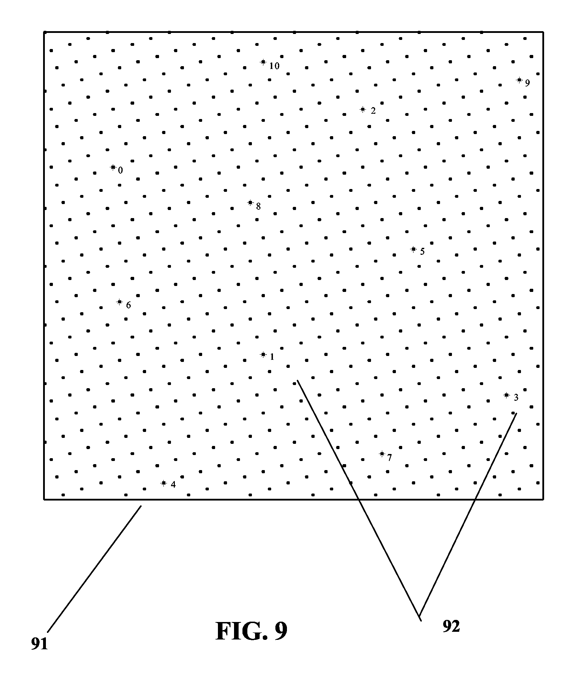

Generation of halftone dot patterns for three different tone levels according to the invention is shown in the following example. Referring to **FIG. 9,** a supercell **91** is characterized by TS = 80, A=8, and B=24. The angle $\alpha$ of the screen is given by the arctangent of 1/3. The total number of halftone dots **92** in the supercell **91** equals to $A^2+B^2 = $ 640. The total number of microdots contained in the supercell **91** is equal to 6400. The ordering sequence is generated using the aggregate distance function

$$H_j \ = \ \sum_k f(\mathrm{d}_{j,k}), \ \text{where} \ f = \frac{1}{d(j,k)^2}$$

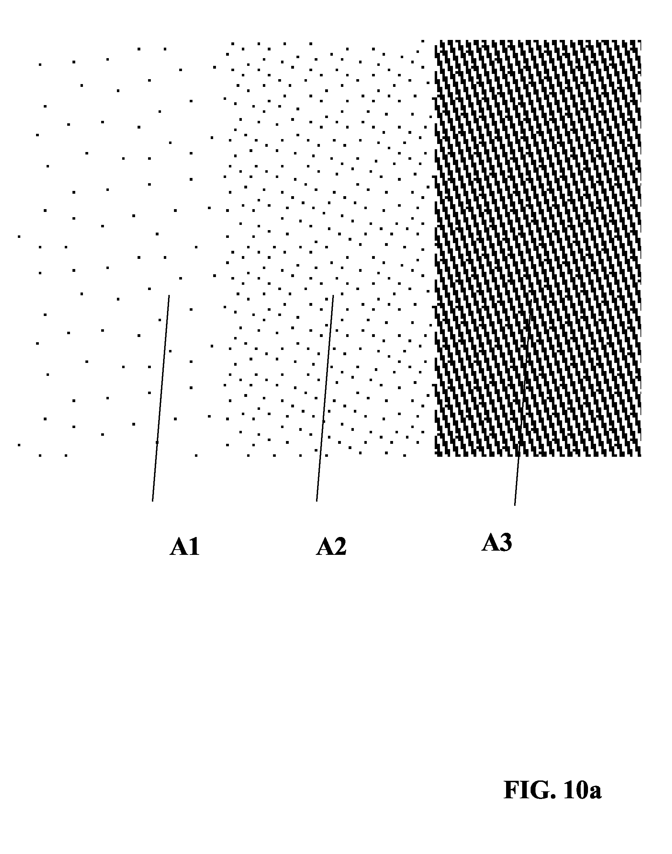

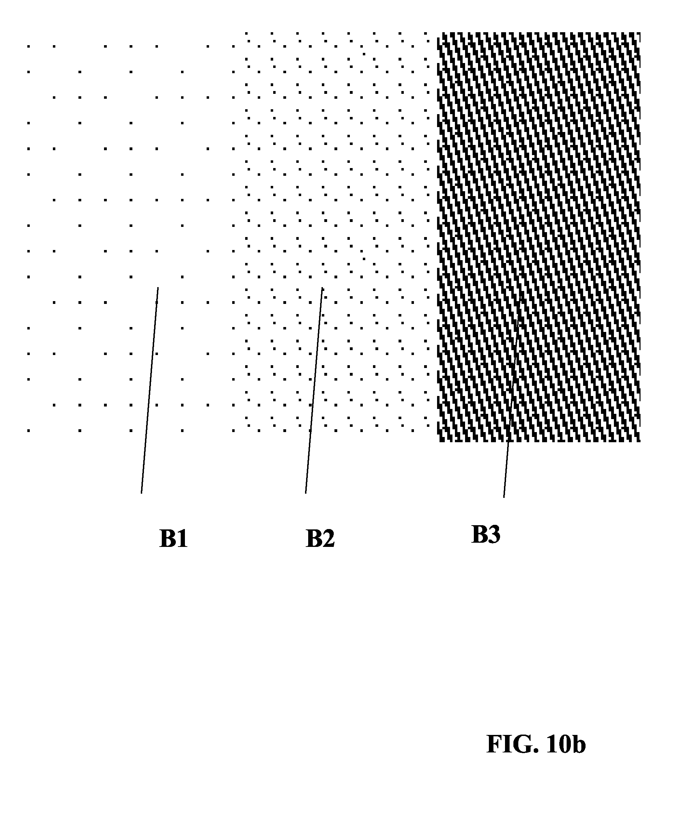

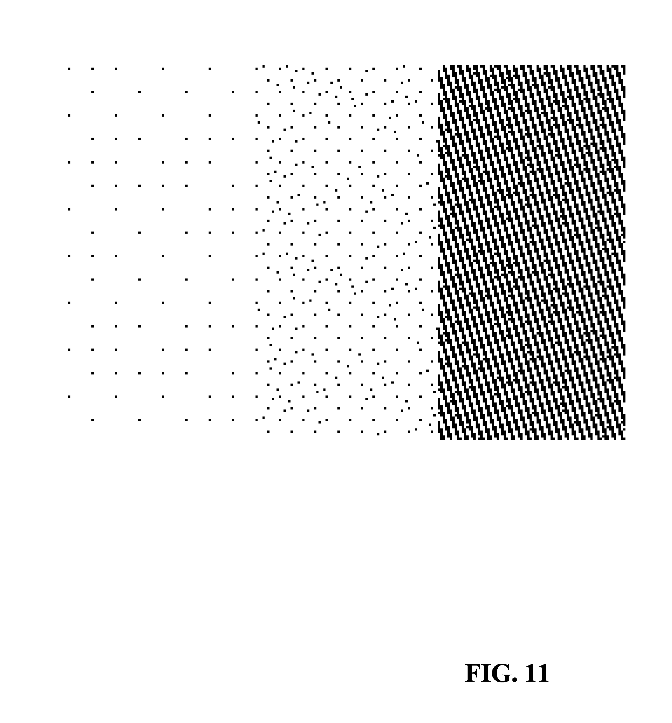

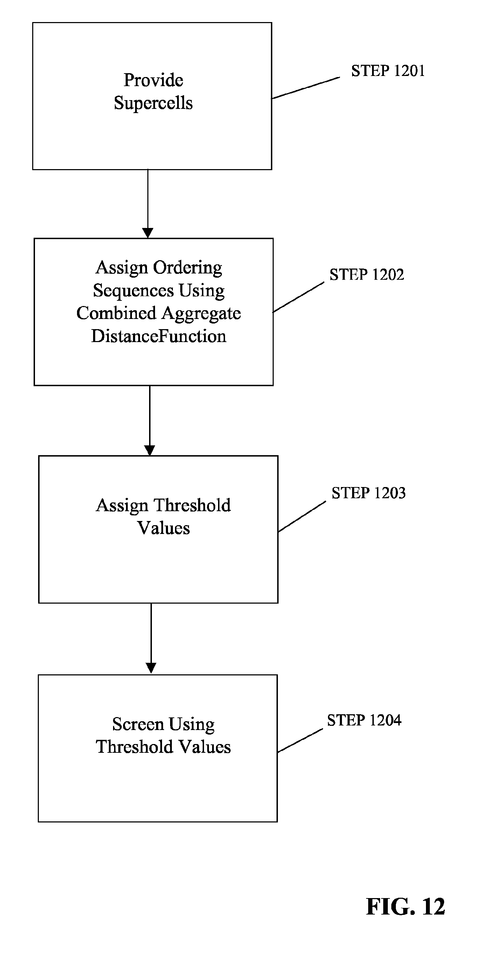

Each potential next virtual halftone dot center is evaluated in terms of a sum of a specific function f of the distances **d** between the candidate virtual halftone dot center **j** and each previously chosen virtual halftone dot center **k.** The candidate virtual halftone dot center with the minimum "cost" is chosen, and the process is iterated until all virtual halftone dot centers in the supercell are included in the ordering sequence. First eleven virtual halftone dot centers of the ordering sequence generated according to the embodiment present invention are labeled 0 through 10.
Referring to **FIGS. 10a-10b,** halftone patterns **A1, A2, A3** are generated for three different tone levels using the threshold matrix generated using the supercell in **FIG. 9**. The resulting three halftone patterns have 40, 192, and 3300 black microdots out of 6400 microdots. Referring to **FIG. 10a,** the second number in the ordering sequence was disposed asymmetrically in relation to the halftone dot center that has received the first sequence number. The halftone pattern **A1** is a well-dispersed halftone pattern in the highlights where the number of dot centers visited is much less than the total number. The halftone pattern **A2** is a pattern where the number of "visited" dot centers is nearing the total number. The underlying grid structure is visible, but the "holes" in the pattern are well dispersed. The halftone **A3** represents a tone level of just above 50% coverage. Some gaps in the white lines are visible on the printed page, but the pattern of gaps is well dispersed.
Referring to **FIG. 10b**, the second number in the ordering sequence was disposed symmetrically in relation to the halftone dot center that has received the first sequence number. Corresponding halftone patterns **B1, B2**, and **B3** have more regular structure than patterns of **FIG. 10a**, but also show good dispersion.
Comparing the halftone patterns in **FIG. 10a-10b** with the halftone pattern shown in **FIG. 11,** which was generated for the same three tone levels using the threshold matrix obtained according to the method described in US 5,766,807, one can appreciate that the halftone patterns in **FIG. 10a-10b** lack clumping of microdots and visible diamond-shaped structures present in the halftone patterns in **FIG. 11.**
Although the embodiments above described a supercell having a plurality of halftone dot centers arranged on a periodic grid, it can be appreciated that in other embodiments virtual halftone dot centers need not be located on a precise periodic grid. For example, starting with a periodic placement grid, it is sometimes useful to displace virtual halftone dot centers by small random amounts. Since the proposed method does not depend on the grid structure, the method is unchanged. Moreover, the method may also be applied to any configuration of virtual dot centers within a supercell. For example, virtual dot centers could be placed at dispersed locations within the tile where the average distance between neighboring centers was fixed to some constant. Again, the method could be used to determine the order in which these halftone dot centers are visited.
In some embodiments used in color printing applications a different halftone screen is used for each color separation. One example of such is described in US 5,155,599. In such embodiments, it can be useful to use an ordering function that takes into account the virtual halftone dot centers in the supercells associated with two or more colors. The improved ordering sequence that results is then used to create threshold matrices for each color separation, which is in turn used for halftoning an image.
Referring to **FIG. 12**, an embodiment of a method according to the current invention may be used to reproduce a continuous tone image as a halftone color image using threshold values in threshold matrices created for each color separation. As a first step, rational tangent supercells are generated for each color separation **(STEP 1201)**. As described above, each supercell, or tile, is characterized by a tilesize TS, indicating the linear size of the tile expressed in a number of microdots, and two integer values A and B, defining the geometry of the halftone screen. In one embodiment of the invention, supercells for each color separation are of the same size TS and contain the same number of microdots. The angle of each screen, defined by the arctangent of A/B, however, is different for each screen, as is typically done to minimize artifacts. For example, the angle for cyan screen can be 15.1360 degrees; the angle for magenta screen can be 45.2046 degrees, and the screen for the yellow screen can be 75.2732 degrees.

Once the parameters of supercells have been specified, ordering sequences are assigned to the virtual halftone dot centers of the supercells for each color separation using an ordering function, which preferably is an aggregate distance function **(STEP 1202)**.

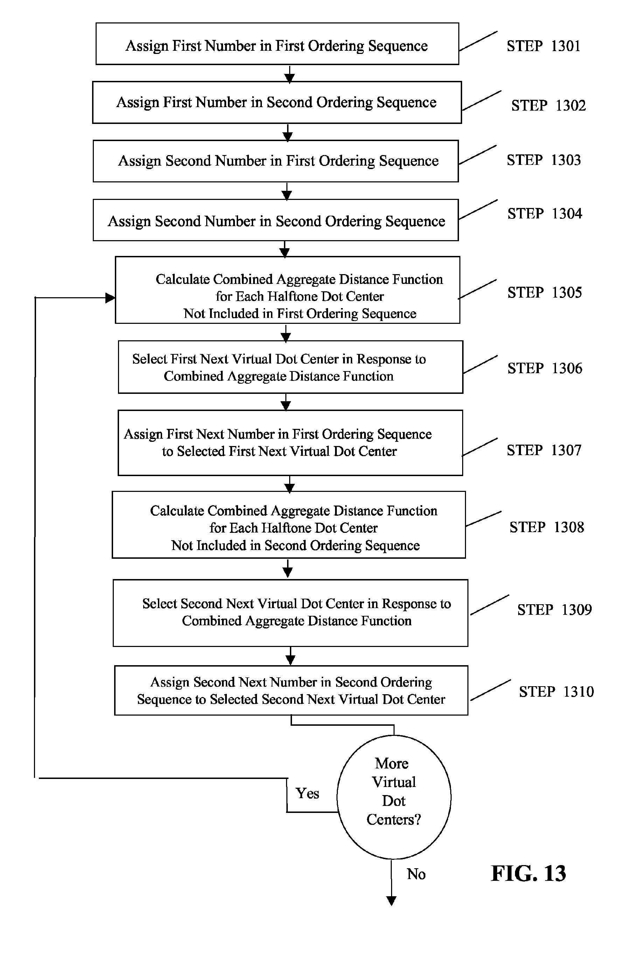

Referring now to **FIG. 13**, in one embodiment of the invention, the ordering sequences are assigned for two or more color separations simultaneously, wherein the next dot center in the ordering sequence is chosen alternately for each screen. Although this method is described with reference to two color separations, however, it can be expanded to include any number of color separations.

The first number of the first sequence is assigned to a first virtual halftone dot center in the first base supercell **(STEP 1301)**. The first number in the sequence is typically the lowest or highest number in the ordering sequence, for example, the number 1. Likewise, the first number in the second ordering sequence is assigned to a first virtual halftone dot center in the second base supercell **(STEP 1302)**. As in the embodiment of **FIG. 4** above, the virtual halftone dot center that receives the first number of either sequence can be chosen in a number of ways, including arbitrarily. In one embodiment, the first number in the second sequence is assigned to a virtual halftone dot center that is asymmetric to the virtual halftone dot center assigned to the first number in the first ordering sequence. Here, the two virtual halftone dot centers are sufficiently asymmetric if the respective horizontal and vertical distances between (i) the first virtual halftone dot center and the second virtual halftone dot center, and (ii) the second virtual halftone dot center and the replication of the first virtual halftone dot center in any supercells adjacent to the base supercell, are substantially not equal. The supercells for each color can be considered to be overlaid for this determination. If the combined aggregate function takes into account the locations of virtual halftone dot centers in supercells associated with more than one color, it may be sufficient to select the second number of the first sequence so that it is asymmetric. Use of the combined aggregate function below would select the second number in the second ordering sequence appropriately.

Optionally, the second number in the first ordering sequence is assigned to a second virtual halftone dot center in the first base supercell **(STEP 1303)**, and, optionally, the second number in the second ordering sequence is assigned to a second virtual halftone dot center in the second base supercell **(STEP 1304)**. The second number in each ordering sequence is typically the next lowest or highest number in the ordering sequence, for example, the number 2. In one embodiment, the virtual halftone dot center that receives the second number in a given ordering sequence is selected so that it is disposed asymmetrically in relation to the halftone dot center that has received the first sequence number, taking into account the horizontal and vertical replication, as described in the embodiment of **FIG. 4**. Again, it may be possible to select one of the second numbers manually to be asymmetric and let the aggregate distance function select the remaining virtual halftone dot centers.

In some embodiments, it may be sufficient that the virtual halftone dot centers that are most symmetric are not chosen. In other embodiments, the first virtual halftone dot center in the first ordering sequence are chosen in a predetermined manner or arbitrarily, and the second virtual halftone dot center is chosen to be asymmetric. In yet another embodiment, the virtual halftone dot center that receives the second number in a given ordering sequence is selected so that it is disposed symmetrically in relation to the halftone dot center that has received the first sequence number, taking into account the horizontal and vertical replication.

In order to assign each next number in a given ordering sequence to a virtual halftone dot center in each base supercell, a combined aggregate distance function is calculated for each virtual dot center not already included in that ordering sequence. The next number in the ordering sequence is typically the next lowest or highest number in the sequence. For a given virtual dot center, the combined aggregate distance function is a function that takes as input the distances from a dot center to other dot centers. Here, the combined aggregate distance function takes as input the locations of the virtual halftone dot centers from supercells each associated with different color separation. In one embodiment, the combined aggregate distance function takes as input the locations of the virtual halftone dot centers already included in at least one of the ordering sequences. Although described for two supercells, the method of the invention can be extended to any number of color separations, with each of the supercells for the separations considered to be overlaid for distance calculation purposes.

Referring still to **FIG. 13**, the aggregate distance function is calculated for each virtual halftone dot center not already assigned a number in the first ordering sequence. **(STEP 1305)**. In one embodiment, the next virtual halftone dot center is selected in response to the combined aggregate distance function as the virtual dot center that has one of the least values of the calculated combined aggregate distance function **(STEP 1306)**. Typically, the virtual halftone dot center with the lowest aggregate distance value is selected. The next number in the first ordering sequence is assigned to the selected virtual dot center **(STEP 1307).** Then, the combined aggregate distance function is calculated for each virtual halftone dot center not already assigned a number in the second ordering sequence. **(STEP 1308)**. In one embodiment, the next virtual halftone dot center is selected in response to the combined aggregate distance function as the virtual dot center that has one of the least values of the calculated combined aggregate distance function **(STEP 1309)**. Typically, the virtual halftone dot center with the lowest aggregate distance value is selected. The next number in the second ordering sequence is assigned to the selected virtual dot center **(STEP 1310)**.

These six steps **(STEP 1305** through **STEP 1310)** are repeated until each virtual halftone dot center in the base supercell is included in at least one of the ordering sequences.

In one embodiment, the combined aggregate distance function is a sum of two component aggregate distance functions, each of which is based on the minimization of a convolution-style "cost" function

$$H_j \;=\; \sum_k f(d_{j,k}).$$

In a preferred embodiment, the class of functions from which f is chosen is the class of functions *f*:

$$f = \frac{1}{d(j,k)^a} \text{ where } a > 1.$$

**[00102]** Good performance results can be achieved with values of a of 1.5 and 2.

Each potential next virtual halftone dot center in a given screen is evaluated in terms of a sum of two component aggregate distance functions. The first component aggregate distance function is a sum of inverse distances from that virtual halftone dot center to each virtual halftone dot center already included in the given ordering sequence; each of the distances raised to a positive power. The second component aggregate distance function is a constant multiplied by a sum of inverse distances from that virtual halftone dot center to each virtual halftone dot center already included either in the given ordering sequence or in the other ordering sequence; each of the distances raised to a positive power. In one embodiment of the invention, the constant is less than one. In a preferred embodiment of the invention, the constant equals 0.5.

In a preferred embodiment of the invention, after the first virtual halftone dot centers are assigned in both sequences, the assignment proceeds as follows. The aggregate distance function

$$H_j \;=\; \sum_k f(d_{j,k}), \text{ where } f = \frac{1}{d(j,k)^2}$$

is calculated for each candidate j virtual dot center in the first supercell.

Preferably $[d(j,k)]^2 = (x_j - x_k)^2 + (y_j - y_k)^2$.

Then, the number of candidates *m* having least value of the aggregate distance function is chosen, where *m* is the square root of the total number of virtual halftone dot centers in the first supercell.

Then, for each of these *m* candidates, six closest virtual halftone dot centers in the second supercell, which are already assigned numbers to in the second ordering sequence, are identified. The next number in the first ordering sequence is then assigned to the virtual halftone dot center among the *m* candidates having a maximum minimal distance to its previously identified six closest virtual halftone dot centers in the second supercell. In case of two candidates having the same maximum minimal distance, the second minimal distance is calculated and the candidate having a larger value of the second minimal distance is chosen. Further ties can be resolved by examining the next larger minimal distances in the same manner. The algorithm is then repeated to assign next number in the second ordering sequence.

In one such embodiment, after a predetermined number of order numbers have been assigned, only one supercell is used, and the virtual halftone dot centers in the other supercell(s) are not included in the aggregate distance function calculation. In a preferred embodiment, the predetermined number of order numbers at which this change is made is 75% of the total number of virtual halftone dot centers in the supercell.

Referring back to **FIG. 12**, the embodiment further includes assigning the threshold values to microdots according to each ordering sequence to obtain a threshold matrix for each color separation **(STEP 1203)**. This step comprises assigning microdots to each of the halftone dot centers in the base supercells for each color separation, and then optionally rescaling the range of matrix elements to obtain threshold matrices suitable for electronic screening, as described above in connection with **FIG. 1**. The method of the present invention concludes with the transformation of a continuous tone image into a color halftone image using threshold matrix of each color separation as described in connection with **FIG. 8 (STEP 1204)**.

Having described in detail preferred embodiments of the current invention, it will now be apparent to those skilled in the art that numerous modifications can be made therein without departing from the scope of the invention as defined in the following claims.

**Claims**

1.  A method for reproducing a contone image (91) as a halftone image (81) on a recording medium, using threshold values (83) in a threshold matrix (86), comprising the steps of:

    -   providing a base supercell (21) suitable for periodically tiling (21A, 21B, 21C, 21D) a plane, the base supercell (21) having a plurality of microdots (28) and a plurality of virtual halftone dot centers (22);
    -   assigning an ordering sequence comprising a series of numbers on the virtual halftone dot centers (22) in the base supercell (21) by:

        (i) assigning a first number in the ordering sequence to a first virtual halftone dot center (22) in the base supercell (21);
        (ii) assigning a second consecutive number in the ordering sequence to a second virtual halftone dot center (22) in the base supercell (21);
        (iii) calculating a value of an aggregate distance function for each virtual halftone dot center (22) in the base supercell (21) not already included in the ordering sequence;
        (iv) selecting a next virtual halftone dot center (22) in the base supercell (21) in response to the calculated aggregate distance function, the next virtual halftone dot center (22) having one of the least values of the calculated aggregate distance function;
        (v) assigning the next consecutive number in the ordering sequence to the selected next virtual halftone dot center (22) in the base supercell (21); and
        (vi) repeating steps (iii), (iv), and (v), until each virtual halftone dot center in the base supercell is included in the ordering sequence;

    -   assigning threshold values (83) to microdots (28) in response to the ordering sequence thereby generating the threshold matrix (86) in the base supercell; and
    -   using the threshold matrix (86) in combination with the contone image (91) to generate a screened halftone image (81) on the recording medium.

2.  The method of claim 1, wherein the aggregate distance function for each virtual halftone dot center comprises a sum of inverse distances from said virtual halftone dot center to each virtual halftone dot center already included in the ordering sequence, with each of the distances raised to a positive power.

3.  The method of claim 2, wherein the positive power is 1.5 or 2.0.

4.  The method according to any one of the previous claims, wherein the second virtual halftone dot center is disposed asymmetrically in relation to the periodic replication of the first virtual halftone dot center in any supercells adjacent to the base supercell.

5.  The method of claim 4, wherein the distance between the second virtual halftone dot center and the first virtual halftone dot center does not equal to the distance between the second virtual halftone dot center and the periodic replication of the first virtual halftone dot center in any supercells directly adjacent to the base supercell.

6.  The method according to any one of claims 1 to 3, wherein the second virtual halftone dot center is disposed symmetrically in relation to the periodic replication of the first virtual halftone dot center in any supercells adjacent to the base supercell.

7.  The method according to any one of the previous claims, wherein the plurality of virtual halftone dot centers in the base supercell is arranged on a periodic grid having a screen angle and screen ruling.

8.  The method according to any one of the previous claims, further comprising the step of rescaling the range of the threshold values according to a range of pixel values within the contone image.

9.  A screen, suitable for the transformation of a contone image into a halftone image, said screen comprising a plurality of discrete spotlike zones arranged on grid points of a periodic grid defined by a screen angle and a screen ruling, wherein the spotlike zones are generated by using threshold values in a threshold matrix, the threshold matrix produced by the method according to any one of the previous claims.

10. A screening system for converting contone image information to a halftone image information, the screening system comprising means for generating, retrieving or storing a screen according to claim 9.

11. A method for reproducing a contone image as a multi-color halftone image on a recording medium, using threshold values in threshold matrices, comprising the steps of any one of claims 1 to 8 and the steps of:

   - providing a second base supercell suitable for periodically tiling a plane, the second base supercell having a second plurality of microdots and a second plurality of virtual halftone dot centers;
   - assigning a second ordering sequence to the virtual halftone dot centers in the second base supercell, said second ordering sequence comprising series of numbers :

      (ii) assigning a first number in the second ordering sequence to a first virtual halftone dot center in the second base supercell;
      (iii) calculating a value of a combined aggregate distance function for each virtual halftone dot center from a first plurality of virtual halftone dot centers in the first base supercell not already included in the first ordering sequence;
      (iv) selecting a first next virtual halftone dot center in the first base supercell in response to the value of the combined aggregate distance function calculated in step (iii), the first next virtual halftone dot center having one of the least values of the combined calculated aggregate distance function;
      (vi) calculating a value of a combined aggregate distance function for each virtual halftone dot center from a second plurality of virtual halftone dot centers in the second base supercell not already included in the second ordering sequence;
      (vii) selecting a second next virtual halftone dot center in the second base supercell in response to the value of the combined aggregate distance function calculated in step (vi), the second next virtual halftone dot center having one of the least values of the combined calculated aggregate distance function;
      (viii) assigning the next consecutive number in the second ordering sequence to the selected second next virtual halftone dot center in the second base supercell;
      (ix) repeating steps (iii) through (viii), until each virtual halftone dot center in the first base supercell is included in the first ordering sequence and each virtual halftone dot center in the second base supercell is included in the second ordering sequence;

   - assigning threshold values to microdots in response to the first ordering sequence thereby generating the first threshold matrix in the first base supercell;
   - assigning threshold values to microdots in response to the second ordering sequence thereby generating the second threshold matrix in the second base supercell; and
   - using the first threshold matrix and the second threshold matrix in combination with the contone image to generate a screened multi-color halftone image on the recording medium.

12. The method of claim 11, wherein the combined aggregate distance function for each virtual halftone dot center in the first or second plurality of virtual halftone dot centers in the first or second base supercell comprises a sum of a first component aggregate distance function and a second component aggregate distance function, wherein

   - the first component aggregate distance function comprises a sum of inverse distances from said virtual halftone dot center to each virtual halftone dot center already included in the first or second ordering sequence; each of the distances raised to a positive power, and
   - the second component aggregate distance function comprises a first or second constant multiplied by a sum of inverse distances from said virtual halftone dot center to each virtual halftone dot center already included in the first ordering sequence or in the second ordering sequence; each of the distances raised to a positive power and wherein the first or second constants are preferably less than one, and more preferably equal 0,5.

Provide
Supercell — STEP 11

Assign Ordering
Sequence Using
Aggregate Distance
Function — STEP 12

Assign Threshold
Values — STEP 13

Screen Using
Threshold Values — STEP 14

**FIG. 1**

**FIG. 2**

FIG. 2a

**FIG. 3**

```
┌─────────────────────────────────────────────┐
│  Assign First Number in Ordering Sequence     │────── STEP 401
└─────────────────────────────────────────────┘
                      │
                      ▼
┌─────────────────────────────────────────────┐
│  Assign Second Number in Ordering Sequence    │────── STEP 402
└─────────────────────────────────────────────┘
                      │
                      ▼
┌─────────────────────────────────────────────┐
│  Calculate Aggregate Distance Function        │────── STEP 403
└─────────────────────────────────────────────┘
                      │
                      ▼
┌─────────────────────────────────────────────┐
│  Select Next Virtual Dot Center in Response to│────── STEP 404
│       Aggregate Distance Function             │
└─────────────────────────────────────────────┘
                      │
                      ▼
┌─────────────────────────────────────────────┐
│  Assign Next Number to Selected Virtual       │────── STEP 405
│            Dot Center                         │
└─────────────────────────────────────────────┘
                      │
                      ▼
                   ╱ More ╲
          Yes     │ Virtual │
          ────────│  Dot    │
                   ╲Centers?╱
                      │
                      │ No
                      ▼
```

**FIG. 4**

EP 1 318 662 A2

FIG. 5

| | | | | | | | | | | |
|---|---|---|---|---|---|---|---|---|---|---|
| (0)→(1) | 93 | 140 | 66 | 77 | 119 | 118 | 58 | 35 | 80 | 60 |
| 50 | 40 | 142 | 143 | 103 | 41 | 87 | 97 | 33 | 32 | 48 | 95 |
| 110 | 69 | 83 | 141 | 51 | (4)→(5) | 82 | 68 | 34 | 85 | 111 |
| 108 | 38 | 36 | 49 | 59 | (6)→(7) | 137 | 139 | 102 | 92 | 109 |
| 75 | 39 | 37 | 84 | 106 | 94 | 61 | 136 | 138 | 52 | (9) | 42 |
| 133 | 132 | 71 | 105 | 107 | 104 | 22 | 23 | 72 | (10) | (8) | (11) |
| 135 | 134 | 54 | 19 | 74 | 65 | 20 | 21 | 88 | 120 | 62 | 81 |
| 91 | 101 | 17 | 16 | 44 | 99 | 55 | 45 | 122 | 123 | 98 | 47 |
| 29 | 76 | 64 | 18 | 89 | 127 | 126 | 63 | 78 | 121 | 57 | 28 |
| 31 | 113 | 115 | 96 | 86 | 125 | 124 | 14 | 12 | 43 | 53 | 30 |
| 67 | 112 | 114 | 56 | 25 | 46 | 79 | 15 | 13 | 90 | 130 | 100 |
| (2)→(3) | 73 | 26 | 24 | 27 | 117 | 116 | 70 | 129 | 131 | 128 |

# FIG. 6

| | | | | | | | | | | | |
|---|---|---|---|---|---|---|---|---|---|---|---|
| 1 | 19 | 166 | 202 | 118 | 138 | 244 | 227 | 104 | 68 | 143 | 108 |
| 90 | 72 | 237 | 255 | 184 | 74 | 156 | 173 | 33 | 15 | 86 | 170 |
| 223 | 124 | 148 | 219 | 92 | 3 | 21 | 147 | 122 | 51 | 152 | 241 |
| 188 | 53 | 17 | 88 | 106 | 38 | 56 | 218 | 253 | 182 | 164 | 205 |
| 134 | 70 | 35 | 150 | 221 | 168 | 109 | 200 | 235 | 93 | 22 | 76 |
| 216 | 198 | 127 | 203 | 239 | 186 | 45 | 63 | 129 | 40 | 5 | 58 |
| 251 | 234 | 97 | 61 | 132 | 116 | 10 | 28 | 157 | 193 | 111 | 145 |
| 163 | 180 | 26 | 8 | 79 | 177 | 99 | 81 | 228 | 246 | 175 | 84 |
| 31 | 136 | 115 | 44 | 159 | 248 | 230 | 113 | 140 | 211 | 102 | 13 |
| 67 | 207 | 243 | 172 | 154 | 212 | 195 | 42 | 6 | 77 | 95 | 49 |
| 120 | 189 | 225 | 100 | 29 | 83 | 141 | 60 | 24 | 161 | 232 | 179 |
| 37 | 54 | 131 | 47 | 12 | 65 | 209 | 191 | 125 | 214 | 250 | 196 |

**FIG. 7**

**FIG. 8**

**FIG. 9**

A1          A2          A3

FIG. 10a

**B1**          **B2**          **B3**

**FIG. 10b**

**FIG. 11**

Provide
Supercells — STEP 1201

Assign Ordering
Sequences Using
Combined Aggregate
DistanceFunction — STEP 1202

Assign Threshold
Values — STEP 1203

Screen Using
Threshold Values — STEP 1204

**FIG. 12**

Assign First Number in First Ordering Sequence — STEP 1301

Assign First Number in Second Ordering Sequence — STEP 1302

Assign Second Number in First Ordering Sequence — STEP 1303

Assign Second Number in Second Ordering Sequence — STEP 1304

Calculate Combined Aggregate Distance Function
for Each Halftone Dot Center
Not Included in First Ordering Sequence — STEP 1305

Select First Next Virtual Dot Center in Response to
Combined Aggregate Distance Function — STEP 1306

Assign First Next Number in First Ordering Sequence
to Selected First Next Virtual Dot Center — STEP 1307

Calculate Combined Aggregate Distance Function
for Each Halftone Dot Center
Not Included in Second Ordering Sequence — STEP 1308

Select Second Next Virtual Dot Center in Response to
Combined Aggregate Distance Function — STEP 1309

Assign Second Next Number in Second Ordering
Sequence to Selected Second Next Virtual Dot Center — STEP 1310

More Virtual Dot Centers?

Yes

No

**FIG. 13**